Europäisches Patentamt

(19) European Patent Office

Office européen des brevets

(11) Numéro de publication: **0 057 125**
**A1**

(12) # DEMANDE DE BREVET EUROPEEN

(21) Numéro de dépôt: 82400069.9

(22) Date de dépôt: 15.01.82

(51) Int. Cl.³: **G 01 L 11/00**
G 01 L 9/00, G 01 L 9/08

(30) Priorité: 27.01.81 FR 8101450

(43) Date de publication de la demande:
04.08.82 Bulletin 82/31

(84) Etats contractants désignés:
CH DE GB IT LI

(71) Demandeur: MECILEC
91 bis, rue du Cherche-Midi
F-75006 Paris(FR)

(72) Inventeur: Guillemot, Philippe
78, rue de l'Ouest
F-75014 Paris(FR)

(74) Mandataire: Tony-Durand, Serge
Cabinet Tony-Durand 22, Boulevard Voltaire
F-75011 Paris(FR)

(54) **Dispositif de mesure de pression fonctionnant en numérique.**

(57) L'invention a pour objet un dispositif de mesure de pression fonctionnant en numérique.

Le moyen de mesure de l'écart de pression et le circuit de détection des instants où cet écart atteint un incrément ou un décrément déterminés ou une valeur nulle, est constitué par un organe intégré à l'enceinte de mesure. Ce dispositif comprend une paroi étanche déformable (82) agissant sur un organe optoélectronique ou piézoélectrique ou électromécanique qui traduit directement la déformation en signaux logiques.

Application à la réalisation de capteurs de pression.

Fig. 1

EP 0 057 125 A1

"Dispositif de mesure de pression fonctionnant en numérique"

La présente invention a pour objet un dispositif de mesure de pression fonctionnant en numérique. Elle trouve une application dans la réalisation de capteurs de pression utilisables dans des gaz ou des liquides, mais aussi dans la conception de capteurs de force, de déplacement, d'accélération, etc...

Dans la demande de brevet européen N° 79400440.8 du 29 Juin 1979, il est décrit un dispositif de mesure caractérisé en ce qu'il comprend :

- une première chambre soumise à la pression à mesurer,
- une seconde chambre soumise à une pression de référence et réunie à la première par au moins une ouverture munie d'un clapet,
- un moyen de mesure de l'écart, en grandeur et en signe, entre les pressions qui règnent respectivement dans la première et la seconde chambres, ce moyen délivrant un signal électrique fonction dudit écart,
- un circuit de détection des instants où ledit écart atteint un incrément $+\Delta P$ ou un décrément $-\Delta P$ prédéterminés, et de détection des instants où cet écart devient nul,
- un moyen relié audit circuit et apte à commander l'ouverture du ou des clapets lorsque l'écart atteint les valeurs $\pm\Delta P$ et à commander la fermeture du ou des clapets lorsque cet écart devient nul,
- un moyen de comptage-décomptage relié audit circuit et apte à comptabiliser le nombre d'incréments $+\Delta P$ obtenus diminué du nombre de décréments $-\Delta P$ obtenus.

Dans un tel dispositif, le moyen de mesure de l'écart de pression comprend deux ensembles distincts, l'un constitué par une paroi étanche et déformable 82 munie de moyens permettant de délivrer un signal électrique analogique fonction de la déformation de la paroi, l'autre constitué par des circuits de comparaison 90, 92 recevant le signal analogique et le comparant à zéro et à deux seuils correspondant à +ΔP et -ΔP. Ces circuits sont extérieurs à l'enceinte de mesure et ce sont eux qui délivrent le signal logique nécessaire à la commance du clapet 78 et du compteur 86.

Bien que cette disposition donne satisfaction, la présente invention en propose un perfectionnement qui consiste à remplacer les deux ensembles en question par un organe unique conçu pour délivrer directement le signal logique de commande et de comptage, sans qu'il soit besoin de passer par un signal analogique. Le caractère numérique du dispositif s'en trouve alors renforcé.

De façon plus précise, la présente invention a pour objet un dispositif de mesure de pression fonctionnant en numérique, du genre de celui qui est décrit dans la demande citée plus haut, et qui est caractérisé en ce que le moyen de mesure de l'écart, en grandeur et en signe, entre les pressions qui règnent respectivement dans la première et la seconde chambres et le circuit de détection des instants où ledit écart atteint un incrément +ΔP ou un décrément -ΔP prédéterminés et de détection des instants où cet écart devient nul, est constitué par une paroi étanche et déformable séparant les deux chambres et agissant sur un organe apte à traduire la déformation de la paroi directement en signaux électriques logiques indiquant l'apparition d'un écart égal à +ΔP, à -ΔP ou à zéro.

Plusieurs variantes sont prévues, de type optoélectronique, piézoélectrique ou électromécanique, à partir desquelles on pourrait aisément en imaginer d'autres.

Les caractéristiques de la présente invention apparaîtront mieux après la description qui suit, d'exemples de réalisation donnés à titre explicatif et nullement limitatif. Cette description se réfère à des dessins annexés sur lesquels :

- la figure 1 illustre un dispositif de mesure de pression selon l'invention muni d'un organe de type optoélectronique,

- la figure 2 illustre un dispositif du même genre muni d'un autre organe optoélectronique,

- la figure 3 illustre un dispositif selon l'invention muni d'un organe de type piézoélectrique,

- la figure 4 illustre un dispositif muni d'un organe de type électro-mécanique.

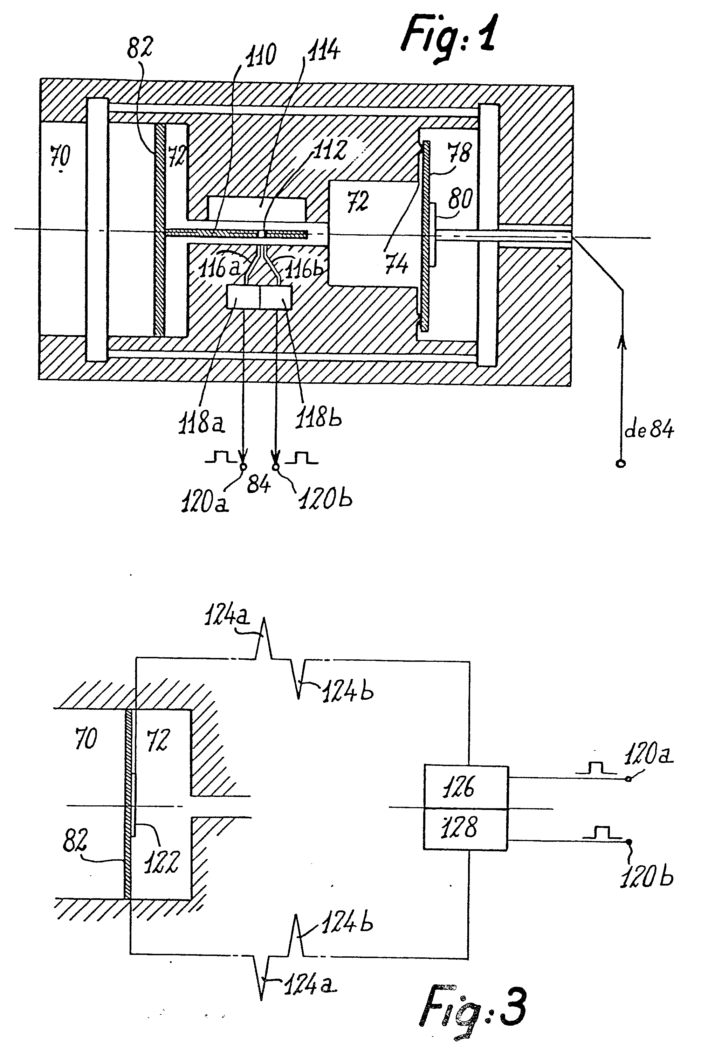

Sur la figure 1, sont représentés des moyens déjà décrits dans la demande citée plus haut, à savoir la chambre 70 soumise à la pression à mesurer, la chambre 72 soumise à la pression de référence, le passage 74 muni d'un clapet 78 commandé par un moyen 80, et la paroi étanche déformable 82 sensible à l'écart de pression entre les deux chambres. Dans l'exemple représenté, le moyen 80 est de nature piézorésistive. Lorsqu'une tension alternative lui est appliquée, il entre en vibration, ce qui a pour effet de rompre l'étanchéité du passage 74. En l'absence de tension d'excitation, la paroi 78 est plaquée sur le corps de l'enceinte, le passage 74 étant alors parfaitement obturé.

Les moyens faisant l'objet de la présente invention portent sur la manière d'engendrer le signal logique reflétant les déformations de la paroi 82. Dans la variante illustrée sur la figure 1, ces moyens comprennent un cache 110 solidaire de la paroi 82 et percé d'une ouverture 112, un émetteur optique 114 (par exemple une photodiode), deux conduits de lumière 116a et 116b (par exemple deux fibres optiques), les entrées de ces conduits étant disposées derrière le cache 110 et écartées l'une de l'autre d'un intervalle au moins égal à la largeur de l'ouverture 112. Les sorties des deux conduits 116a et 116b font face à deux photorécepteurs 118a et 118b, lesquels sont réunis à deux bornes de sortie de signal 120a et 120b.

Le fonctionnement de ce dispositif est le suivant.

L'émetteur 114 émet un rayonnement continu en direction des photorécepteurs 118a et 118b. Ce rayonnement est bloqué par le cache 110, à l'exception de la partie correspondant à l'ouverture 112. Cette partie tombe entre les entrées des conduits optiques 116a et 116b lorsque la paroi 82 n'est pas déformée, c'est-à-dire lorsque les pressions qui règnent dans les deux chambres 70 et 72 sont les mêmes. Dans ce cas, aucun des photorécepteurs 118a et 118b ne reçoit de lumière et les deux bornes de sortie 120a et 120b sont à un même niveau, qui est pris comme niveau logique zéro.

Lorsqu'un écart de pression se manifeste entre les deux chambres 70 et 72, la paroi 82 se déforme, le cache 110 suit cette déformation et l'ouverture 112 se déplace vers l'entrée de l'un des deux conduits (116a si la pression qui règne dans la chambre 72 est plus forte que celle qui règne dans la chambre 70 et 116b dans le cas inverse). L'un des conduits finit par recevoir un rayonnement optique, ce qui se traduit aussitôt par l'émission d'un signal de la part du photorécepteur associé et par l'apparition d'un signal électrique sur la borne de sortie correspondante. Pour l'une des bornes, l'apparition d'une tension correspond à $+\Delta P$ et pour l'autre à $-\Delta P$, la valeur de $\Delta P$ étant déterminée par la géométrie de l'ensemble ouverture-écartement des deux guides.

Le dispositif représenté sur la figure 2 est encore du type optoélectronique. Il comprend, comme le précédent, un émetteur optique 114, deux conduits de lumière 116a et 116b, deux photorécepteurs 120a et 120b reliés à deux bornes de sortie 120a et 120b. La différence entre ce dispositif et celui de la figure 1 tient dans le fait que le rôle de l'obturateur est joué cette fois par la paroi 82 elle-même, dont la déformation, dans un sens ou dans l'autre, permet de masquer l'entrée de l'un ou l'autre des conduits optiques.

Le dispositif de la figure 3 utilise un organe de type piézoélectrique. Il comprend essentiellement une lame piézoélectrique 122 solidaire de la paroi déformable 82. Cet organe délivre des impulsions 124a ou 124b de polarités opposées selon le sens de déformation de la lame. Eventuellement, des circuits 126 et 128 peuvent être utilisés pour la mise en forme des signaux délivrés par la lame 122 afin qu'apparaissent, sur les bornes de sortie 120a et 120b, des signaux de caractéristique appropriée.

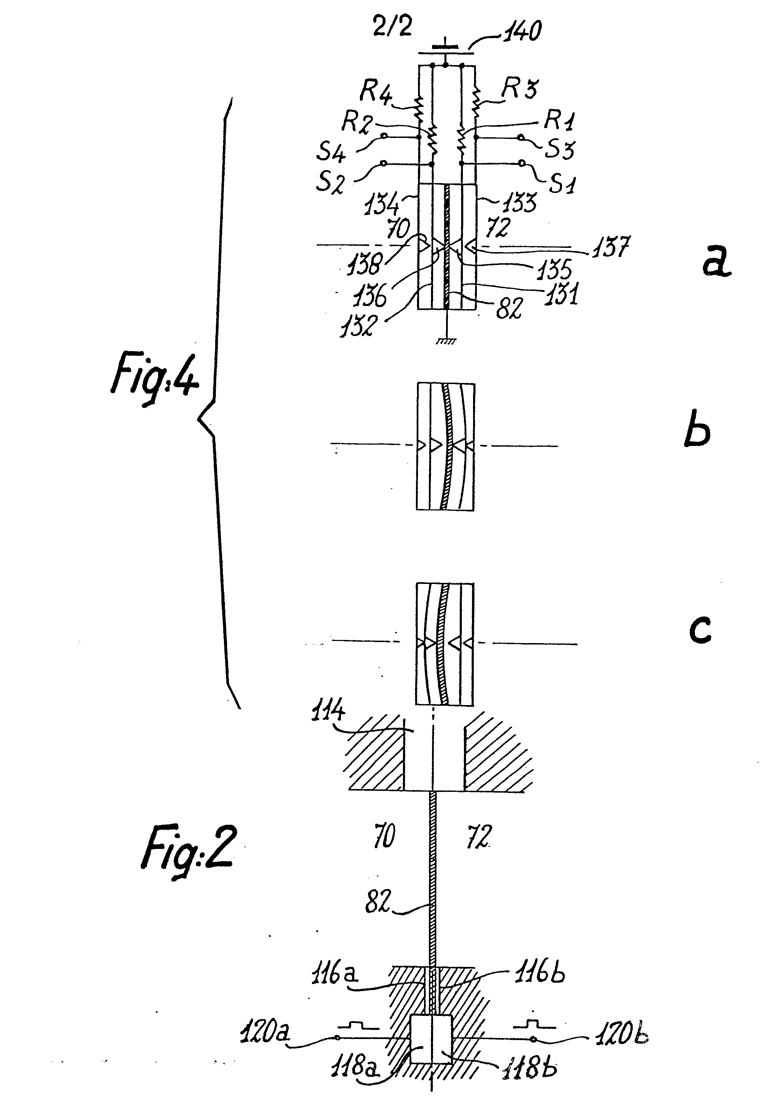

Enfin, le dispositif de la figure 4 est de type électromécanique. Il comprend quatre lames déformables non étanches 131 à 134, munies chacune d'un contact, respectivement 135 à 138, ces lames étant disposées symétriquement deux à deux de part et d'autre de la paroi étanche déformable 82. Les lames 131 à 134 sont en un matériau conducteur de l'électricité ou comportent un élément conducteur, et elles sont reliées à une source 140 de tension continue V, à travers des résistances R1 à R4. Ces dernières sont reliées à des bornes de sorties S1 à S4. La paroi 82 est elle aussi en un matériau conducteur ou comprend un élément conducteur, et elle est reliée à la masse.

Le fonctionnement de ce dispositif est le suivant. A l'équilibre, les contacts 135 et 136 des lames 131 et 132 sont appliqués de part et d'autre de la paroi centrale 82. Les bornes S1 et S2, qui sont alors reliées à la masse à travers les lames 131 et 132 et la paroi centrale, sont donc à un potentiel nul. En revanche, les bornes S3 et S4 sont au potentiel V de la source 140.

Lorsque la pression de la chambre 70 excède celle de la chambre 72, la paroi centrale 82 se déforme et repousse la lame 131 ; le contact entre la lame 132 et la paroi 82 est interrompu ; les bornes S2 et S4 sont alors toutes deux au potentiel V.

La paroi centrale continuant à se déformer sous l'effet de l'écart de pression grandissant, la lame 131 finit par toucher le contact 137. A cet instant, le potentiel de S3 tombe de V à 0 et les deux sorties S1 et S3 sont à un potentiel nul. La combinaison S2=S4=V et S1=S3=0 est interprétée comme un état logique indiquant que l'écart de pression a atteint une valeur $\Delta P$.

Inversement, lorsque la pression de la chambre 70 est inférieure à celle de la chambre 72, le même mécanisme se déroule mais de manière symétrique : les potentiels des bornes S1 et S3 sont tous deux au niveau V, celui de S2 est à zéro et celui de S4 tombe à 0 lorsque l'écart atteint la valeur $-\Delta P$.

Le réglage de $\Delta P$ s'effectue en jouant sur la position des contacts 137 et 138 par rapport aux lames 131 et 132.

REVENDICATIONS

1. Dispositif de mesure de pression fonctionnant en numérique, comprenant :

- une première chambre soumise à la pression à mesurer,

- une seconde chambre soumise à une pression de référence et réunie à la première par au moins une ouverture munie d'un clapet,

- un moyen de mesure de l'écart, en grandeur et en signe, entre les pressions qui règnent respectivement dans la première et la seconde chambres, ce moyen délivrant un signal électrique fonction dudit écart,

- un circuit de détection des instants où ledit écart atteint un incrément +ΔP ou un décrément -ΔP prédéterminés, et de détection des instants où cet écart devient nul,

- un moyen relié audit circuit et apte à commander l'ouverture du ou des clapets lorsque l'écart atteint les valeurs ±ΔP et à commander la fermeture du ou des clapets lorsque cet écart devient nul,

- un moyen de comptage-décomptage relié audit circuit et apte à comptabiliser le nombre d'incréments +ΔP obtenus diminué du nombre de décréments -ΔP obtenus, caractérisé en ce que le moyen de mesure de l'écart, en grandeur et en signe, entre les pressions qui règnent respectivement dans la première et la seconde chambres et le circuit de détection des instants où ledit écart atteint un incrément +ΔP ou un décrément -ΔP prédéterminés et de détection des instants où cet écart devient nul, est constitué par une paroi étanche et déformable (82) séparant les deux chambres (70, 72) et agissant sur un organe apte à traduire la déformation de la paroi directement en signaux électriques logiques indiquant l'apparition d'un écart égal à +ΔP, à -ΔP ou à zéro.

0057125

2. Dispositif selon la revendication 1, caractérisé en ce que ledit organe est de type optoélectronique et comprend un émetteur optique (114), deux guides de lumière (116a, 116b) séparés par un intervalle, deux photorécepteurs (118a, 118b) et un écran solidaire de la paroi déformable et se déplaçant entre l'émetteur et les guides de lumière pour permettre ou non à la lumière de pénétrer dans l'un ou l'autre des guides.

3. Dispositif selon la revendication 2, caractérisé en ce que l'écran se déplaçant entre l'émetteur et les guides de lumière est constitué par un cache (110) muni d'une ouverture (112), qui, au repos, est disposée en regard de l'intervalle séparant les deux guides de lumière.

4. Dispositif selon la revendication 2, caractérisé en ce que l'écran se déplaçant entre l'émetteur et les guides de lumière est constitué par la paroi étanche déformable (82) elle-même.

5. Dispositif selon la revendication 1, caractérisé en ce que ledit organe comprend un élément piézoélectrique (122) solidaire de la paroi étanche déformable (82) et émettant des signaux électriques dont la polarité indique le sens de déformation de la paroi.

6. Dispositif selon la revendication 5, caractérisé en ce qu'il comprend en outre deux circuits (126,128) de mise en forme des signaux électriques délivrés par l'élément piézoélectrique (122).

7. Dispositif selon la revendication 1, caractérisé en ce que ledit organe comprend quatre lames métalliques déformables (131, 132, 133, 134) disposées symétriquement deux à deux de chaque côté de la paroi étanche déformable (82), chacune de ces lames étant munie d'un contact et étant reliée électriquement à une source de tension (140) à travers une résistance (R1, R2, R3, R4), elle-même reliée à une borne de sortie (S1, S2, S3, S4), la paroi étanche déformable étant par ailleurs électriquement reliée à une masse.

**Fig:1**

**Fig:3**

2/2

Fig.4

a

b

c

Fig.2

((o)) Office européen
des brevets

**RAPPORT DE RECHERCHE EUROPEENNE**

EP 82 40 0069

| Catégorie | Citation du document avec indication, en cas de besoin, des parties pertinentes | Revendication concernée |
|---|---|---|
| | **DOCUMENTS CONSIDERES COMME PERTINENTS** | |
| DY | EP - A - 0 006 817 (P. GUILLEMOT)<br>* Résumé; figures * | 1 |
| | -- | |
| Y | CH - A - 145 566 (A. HUGGENBERGER)<br>* Page 1, colonne de droite, dernier alinea; page 2, colonne de gauche, alineas 1-4, figures * | 1 |
| | -- | |
| Y | CH - A - 608 076 (MULTISATE A.G.)<br>* Résumé; page 3, colonne de gauche lignes 23-39, colonne de droite, lignes 50-68; figure 2 * | 1 |
| | -- | |
| Y | MEASUREMENT TECHNIQUES, vol.19, no.11, novembre 1976,<br>NEW YORK (US)<br>O.A. SAFONOV et al.: "Period required to balance a rate-of-pressure-change converter"<br>pages 1610-1612<br>* Page 1610, alineas 1-3; figure 1 * | 1 |
| | -- | |
| A | FR - A - 2 351 385 (DRESSER INDUSTRIES, INC.)<br>* Page 8, lignes 15-26; figure 4 * | 2 |
| | -- | |
| A | GB - A - 1 295 144 (LICENCIA)<br>* Page 2, lignes 10-18; figure 1 * | 5 |
| | ---- | |

**CLASSEMENT DE LA DEMANDE (Int. Cl. 3)**

G 01 L 11/00
G 01 L  9/00
G 01 L  9/08

**DOMAINES TECHNIQUES RECHERCHES (Int. Cl. 3)**

G 01 L  9
    L 11
    L 13
    L 19

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

Le présent rapport de recherche a été établi pour toutes les revendications

| Lieu de la recherche | Date d'achèvement de la recherche | Examinateur |
|---|---|---|
| La Haye | 23-04-1982 | VAN ASSCHE |

OEB Form 1503.1  06.78